# EUROPEAN PATENT SPECIFICATION

(11) **EP 2 999 817 B1**
(45) Date of publication and mention of the grant of the patent: **20.02.2019**
(21) Application number: 14729378.1
(22) Date of filing: 20.05.2014
(51) Int. Cl.: D21C 9/08, D21H 17/10, D21H 17/43, D21H 17/66, D21H 21/02

(54) **ANTISCALANT COMPOSITION AND ITS USE**
KESSELSTEINHEMMENDE ZUSAMMENSETZUNG UND DEREN VERWENDUNG
COMPOSITION ANTI-TARTRE ET SON UTILISATION

(30) Priority: 20.05.2013 FI 20135537
(43) Date of publication of application: 30.03.2016
(73) Proprietor: Kemira Oyj, 00180 Helsinki (FI)
(72) Inventor: PUUPPONEN, Salla, FI-02130 Espoo (FI); KONN, Jonas, FI-10210 Inkoo (FI)
(74) Representative: Berggren Oy, Turku
(86) International application number: PCT/FI2014/050380
(87) International publication number: WO 2014/188067

(56) References cited:
- EP-A1- 0 628 539
- EP-A1- 2 390 284
- EP-A2- 0 146 964
- EP-A2- 0 814 193
- WO-A1-2006/106947
- WO-A1-2010/106077
- WO-A1-2012/020427
- US-A- 3 784 469
- US-A- 3 804 770
- US-A- 3 951 594
- US-A- 4 990 278
- US-A- 5 378 372

## Description

The invention relates to a use of antiscalant composition according to the preambles of the enclosed independent claims.

Scaling of undesired, sparingly-soluble inorganic salts onto process surfaces is a major problem in several industries, including paper industry. Scaling occurs when a solution contains more dissolved solute than it is possible for saturated solution and salt precipitates spontaneously, generally onto various surfaces in the process. Scales may be treated with scale inhibitors that prevent/retard scale formation or dissolve the scale formed. The inhibition performance of polymeric antiscalants is based on attractive forces between cations in the salt and the functional groups of scale inhibitor.

Calcium oxalate is among the most challenging scales in pulp and paper mills, and it has become one of the major precipitates in bleaching operations due to enhanced oxidative decomposition of lignin and xylan in elemental chlorine free, ECF, and total chlorine free, TCF, bleaching plants. Highly oxidative conditions and abrupt pH changes in ECF and TCF processes increase oxalate scale formation. Oxalate scale formation may occur also in mechanical pulping and in oxide bleaching. Scale formation causes significant losses in the production efficiency of the mills due to accumulation of scale onto device surfaces, or even blockages in pipelines and pumps. Calcium oxalate typically forms hard precipitates onto equipment surfaces, particularly onto heat transfer equipment. Scales may be removed by cleaning, but it causes major production losses due to regular maintenance shutdowns. Furthermore, calcium oxalate can also precipitate onto pulp fibers resulting in deterioration of paper quality. An effective antiscalant against calcium oxalate scaling is therefore needed.

Calcium oxalate can crystallize as three different hydrates, namely as monohydrate, tetragonal dihydrate and triclinic trihydrate, and additionally calcium oxalate monohydrate has three different polymorphs, two of which are monoclinic and one orthorombic. Calcium oxalate monohydrate does not exist generally as separate crystals, but rather as twins or twin intergrowths. All three calcium oxalate hydrates have importance in scaling processes in pulp and paper mills. The most common precipitate in the paper industry is thermodynamic calcium oxalate monohydrate phase, but also calcium oxalate dihydrate has been reported to precipitate in acidic pH range of 2.5 - 4, and calcium oxalate trihydrate is known to have significant impact on calcium oxalate scaling as primary precipitant, particularly in dynamic systems.

Since all three hydrates of calcium oxalate are crystallized in different crystal systems, it is a challenging precipitate to treat. Several phases of calcium oxalate complicate usage of scale inhibitors as a scale treatment method, since inhibitors interact generally with active sites of a crystal surface, which may vary significantly for different phases. Inhibitors should fit onto the crystal growth units and have a certain affinity towards them. Furthermore, the large crystal volume of the most common precipitate calcium oxalate monohydrate and its existence as twins and twin intergrowths may complicate scale inhibition process further. Therefore, tailoring of effective antiscalants is more difficult for a scaling system containing different phases.

US 3,951,594 discloses a hydrogen peroxide bleaching solutions and process, where aqueous solutions of hydrogen peroxide containing sodium orthosilicate in combination with a magnesium ion-polyphosphate ion stabiliser.

EP 2390 284 discloses a process for manufacturing high solids suspensions of mineral materials.

WO 2012/020427 discloses polyphosphate fertilizer combinations comprising at least one alkaline earth metal amd optionally at least one nutrient ion.

WO 2006/106947 discloses an abrasive base inhibited from reacting with fluorine compound, which is produced by heating anhydrous calcium secondary phosphate in presence of a magnesium compound and a polyphosphate.

US 4,990,278 discloses corrosion inhibited deicing composition and its use. The deicing composition comprises a major portion of magnesium chloride and an effective amount of inhibitor including a polyphosphate salt.

EP 0146 964 discloses a method of producing cast coated paper.

EP 0814 193 discloses a stabilising agent for peroxide-bleaching procedure. The stabilising agent includes (A) a component including homo- or copolymer of α-hydroxyacrylic acid or water soluble salt or polylactone of the homo- or copolymer; (B) a component including a homo- or copolymer of acrylic acid, methacrylic acid and/or maleic acid and water-soluble salt of the homo- or copolymer; (C) a component including DTPA, TTHA or water-soluble salt thereof, and optionally (D) a component including a water-soluble inorganic Mg salt

An object of this invention is to minimise or even totally eliminate the disadvantages existing in the prior art.

An object is also to provide an effective and safe antiscalant against calcium oxalate scaling in pulp and papermaking processes.

These objects are attained with the invention having the characteristics presented below in the characterising parts of the independent claims.

Typical liquid antiscalant composition for reducing calcium oxalate scale formation comprising a polyanionic antiscalant agent having a plurality of anionic groups, which antiscalant agent is selected from the group consisting of polyphosphates, polymers comprising at least one carboxylic group and any of their mixtures, wherein the antiscalant composition further comprises magnesium ions.

Typically the antiscalant composition is used according to claim 1 for inhibiting and/or reducing formation of calcium oxalate scale in pulp and paper making processes

Typical method for reducing and/or inhibiting formation of calcium oxalate scale in pulp and paper industry comprises adding an antiscalant composition to an aqueous flow in a paper making or pulp making process.

Now it has been surprisingly found out that the efficiency against calcium oxalate scale of a polyanionic antiscalant agent having a plurality of anionic groups, such as polyepoxysuccinic acid, polyphosphates, or polycarboxylates, may be significantly enhanced by mixing it with magnesium ions. The required minimum scale inhibitor concentration may be reduced even by 70 % when the said polyanionic antiscalant is combined with magnesium ions, and the resulting composition is used as antiscalant agent in pulp and paper industry. The antiscaling composition provides unexpected synergetic effects in reducing and/or inhibiting calcium oxalate scale, the synergetic effects clearly exceeding the expected aggregated effect of the individual parts forming the composition. The reason for the effect is not yet fully understood. As described above, the formation of calcium oxalate scale is a common problem in pulp and paper industry. Reduction of calcium oxalate scale formation provides considerable savings both in chemical costs and cleaning time needed. The pulp and paper process may become more effective, as the downtime associated with oxalate scale removal is reduced. It may also be possible to observe improvements in produced paper quality when the calcium oxalate is not precipitated on the fibres.

In this application the term "polyanionic antiscalant agent" is understood to refer to an antiscalant molecule, antiscalant polymer or other antiscalant agent having a negative charge at more than one site of its structure. Thus a polyanionic antiscalant agent has at least two, preferably a plurality of, anionic groups in its structure or attached to its structure. The anionic groups may be all similar or they may be different from each other. For example, the antiscalant agent may be a polycarboxylate, i.e. salt of polycarboxylic acid. Antiscalant agent may be organic or inorganic.

The antiscalant composition is an aqueous liquid composition. This means that the antiscalant composition is free of visible particles and other solid matter. According to one embodiment of the invention the mass ratio of magnesium ions to polyanionic antiscalant agent is 0.1 - 10, preferably 0.15 - 4, more preferably 0.2 - 2.5, even more preferably 0.2 - 1, sometimes 0.25 - 0.5. In this application the magnesium amount is given as pure magnesium, without the counter ion, if nor stated otherwise, and the amount of polyanionic antiscalant agent is given as weight of dry active agent. Typically the amount of magnesium ions is higher than the number of anionic sites in the polyanionic antiscalant agent, i.e. the composition comprises an excess of magnesium ions compared to number of anionic sites in the polyanionic antiscalant agent.

According to one embodiment the antiscalant composition comprises at most 70 weight-% magnesium, preferably at most 50 weight-% magnesium, more preferably at most 35 weight-% magnesium, calculated from the total weight of the active constituents, i.e. magnesium and polyanionic antiscalant agent, in the composition. According to another embodiment the antiscalant composition comprises at least 10 weight-%, preferably at least 20 weight-%, more preferably at least 50 weight-%, sometimes even at least 65 weight-%, of active polyanionic antiscalant.

The antiscalant agent may be prepared simply by mixing of a solution of polyanionic antiscalant agent and a solution of magnesium ions in a desired ratio. Preferably the antiscalant agent and the magnesium ions are allowed to interact with each other before use of the antiscalant composition. The reaction time after the mixing of the antiscalant agent and magnesium ions depends on the process and may vary from minutes to hours.

The magnesium compound, which is used for making of the antiscalant composition, may be any water-soluble magnesium salt, such as magnesium carbonate, magnesium chloride or magnesium sulphate, preferably magnesium sulphate.

The antiscalant composition may further comprise also other constituents in addition to the polyanionic antiscalant and magnesium ions. The composition may further comprise at least one additive, which is selected from a group comprising corrosion inhibitors, biocides, surfactants, sequestrants and other different antiscaling agents. Additives may be added for improving the storage stability of the composition or its performance in different applications.

According to another embodiment of the invention the polyanionic antiscalant agent is a polyphosphate. Polyphosphates are salts or esters of polymeric oxyanions, phosphates, which are tetrahedral anions containing phosphorous attached to four oxygen ions. Polyphosphates sequester scale forming free calcium ions so that a precipitate is not formed. According to one embodiment of the invention the polyanionic antiscalant agent is a polyphosphate, preferably sodium hexametaphosphate, which is a cyclic polyphosphate.

According to one embodiment of the invention the polyanionic antiscalant agent is a polymer comprising at least one carboxylic group, preferably several carboxylic groups, in its polymeric structure. The polymer may also comprise other anionic groups, for example sulphonate or phosphonate groups. According to one embodiment the antiscalant agent may be a copolymer, which comprises both carboxylate and sulphonate groups.

For example, according to an embodiment of the present invention the polyanionic antiscalant agent comprising carboxylic groups is a natural polymer or its derivative, such as carboxymethyl inulin. Carboxymethyl inulin is non-toxic, biodegradable and free of phosphorus. It may be produced by carboxymethylation of inulin that may be extracted from different natural sources, such as from chicory roots, dahlias or Jerusalem artichoke. Inulin is a linear polydisperse polysaccharide comprising mainly β(2→1) fructose units with a glucose unit at the reducing end. The fructose molecules are present in pyranose form. Chain length of inulin is typically 2 - 60 fructose units. Inulin has an average degree of polymerisation, which may vary from 5 to 30, preferably from 10 to 30. Carboxylate groups may be introduced into the inulin for example by carboxymethylation with sodium monochloro acetate as reagent in alkaline medium. Carboxymethyl inulin may have a degree of substitution (DS) in the ranging of 0.15 - 2.5, preferably 0.5 -1.5.

According to another embodiment of the invention the polyanionic antiscalant may be a copolymer, which comprises at least one polymerised monomer, which is selected from a group consisting of acrylic acid; methacrylic acid; and unsaturated mono- or dicarboxylic acids, such as maleic acid, fumaric acid, itaconic acid, aconitic acid, mesaconic acid, citraconic acid, crotonic acid, isocrotonic acid, angelic acid and tiglic acid. Preferably the copolymer is obtained by polymerising acrylic acid with other suitable monomers. Any polymerisation method may be used to prepare the copolymers, free-radical polymerisation methods being preferred.

According to one embodiment of the invention the polyanionic antiscalant agent may be polyaspartic acid, copolymer of polyaspartic acid or salt thereof. Polyaspartic acid is water-soluble polyaminoacid.

According to one embodiment of the invention the polyanionic antiscalant agent may be a water-soluble copolymer of allyl sulphonate and maleic anhydride. The copolymer is formed from a first monomer, which is an ethylenically unsaturated dibasic carboxylic acid or anhydride, preferably maleic acid, itaconic acid or anhydride thereof, and a second monomer, which is allyl sulphonic acid or a salt thereof, preferably sodium allyl sulphonate. The mole ratio of the first monomer to the second monomer may be from 1:3 to 3:1, preferably from 1:2 to 2:1, more preferably from 1:1.5 to 1.5:1. Any ethylenically unsaturated dibasic carboxylic acid or anhydride can be used as the first monomer. Water soluble salts of such copolymers may also be used. The average molecular weight of the copolymer is in the range of 500 - 50000 g/mol, preferably 500 - 10000 g/mol.

According to one embodiment of the invention the polyanionic antiscalant agent is polyepoxy succinic acid (CAS 51274-37-4) or its salt having formula (I). 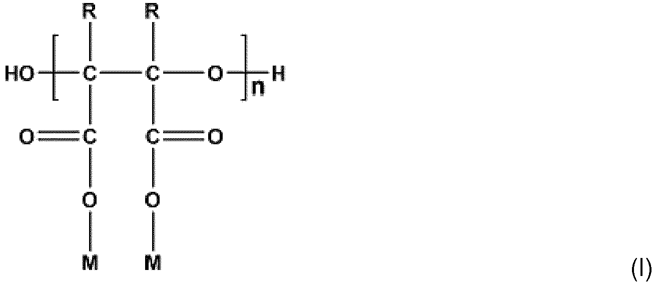 where
M is hydrogen, sodium, magnesium, potassium or ammonium; R is hydrogen or C1 - C4 alkyl; and n is 2 - 10.

In case M is magnesium in formula (I), magnesium ions are added to the composition so that an excess of magnesium ions to the anionic sites is achieved. Typically the average molecular weight of the polyepoxysuccinic acid is 400 - 1500 g/mol.

According to one embodiment of the invention the polyanionic antiscalant is a synthetic or natural polymer and has an average molecular weight of 1000 - 20 000 g/mol, preferably 1500 - 8000 g/mol, more preferably 2000 - 7000 g/mol. In some embodiments the weight average molecular weight is from 4000 to 10 000 g/mol, in some other embodiments the weight average molecular weight is from 1500 to 3000 g/mol.

According to one embodiment the antiscalant composition is environmentally benign and biodegradable.

The antiscalant composition may be used in desired dose, depending on the nature of the calcium oxalate scale and/or other conditions in the aqueous environment where it is used. For example, according to one embodiment of the invention the antiscalant composition may be used in amount of < 1000 ppm, preferably < 500 ppm, more preferably < 100 ppm. In some embodiments the antiscalant composition may be used in amount of 1 - 1000 ppm, preferably 5 - 500 ppm, more preferably 5 - 100 ppm, still more preferably 7.5 - 80 ppm.

The antiscalant composition according to the present invention may be used at any process stage of pulp and paper production, where there is a risk for calcium oxalate scale formation. According to one embodiment of the invention the antiscalant composition may be used for reducing or eliminating the formation of calcium oxalate scale in pulp bleaching plants, i.e. at bleaching stage of pulping, especially in ECF and TCF bleaching processes. Process waters of pulp bleaching plants comprise large amounts of calcium and oxalate ions which contribute to formation of hard precipitates onto equipment surfaces, particularly onto heat transfer equipment. Furthermore, calcium oxalate may also precipitate onto pulp fibers thus resulting in deterioration of paper quality. The antiscalant composition is may be added to at least one process water flow of a bleaching plant, and/or to a water flow circulated in the bleaching process. The antiscalant composition is typically added directly into the process water flow.

According to one embodiment of the invention the antiscalant composition may be used for reducing or eliminating the formation of calcium oxalate scale also in mechanical pulping or in oxide bleaching of pulp.

The antiscalant composition may be added to an aqueous flow having pH > 2, preferably > 3. The aqueous flow, to which the antiscalant composition is added, may have pH in the range of 3 - 8, more preferably 4 - 7.5, even more preferably 4.5 - 7.5.

A liquid antiscalant composition suitable for use in the present invention is described in the following numbered paragraphs:
1. A liquid antiscalant composition for reducing calcium oxalate scale formation comprising a polyanionic antiscalant agent having a plurality of anionic groups, which antiscalant agent is selected from the group consisting of polyphosphates, polymers comprising at least one carboxylic group and any of their mixtures, wherein the antiscalant composition further comprises magnesium ions.
2. Composition according to paragraph 1, wherein the mass ratio of magnesium ions to polyanionic antiscalant agent is 0.1 - 10, preferably 0.2 - 5, more preferably 0.5 - 3, even more preferably 0.8 - 2.5.
3. Composition according to paragraph 1, wherein the composition comprises an excess of magnesium ions compared to number of anionic groups in the polyanionic antiscalant.
4. Composition according to paragraph 1, wherein the composition comprises at most 70 weight-%, preferably at most 50 weight-%, more preferably at most 35 weight-%, of magnesium ions, calculated from the total weight of the active constituents in the composition.
5. Composition according to any of preceding paragraphs 1 - 4, wherein the magnesium ions originate from water-soluble magnesium salt, such as magnesium carbonate, magnesium chloride or magnesium sulphate, preferably from magnesium sulphate.
6. Composition according to paragraph 1, wherein the composition comprises at least 10 weight-%, preferably at least 20 weight-%, more preferably at least 50 weight-%, sometimes even at least 65 weight-%, of active polyanionic antiscalant, calculated from the total weight of the active constituents in the composition.
7. Composition according to paragraph 1, wherein the polyanionic antiscalant agent is sodium hexametaphosphate.
8. Composition according to paragraph 1, wherein the polyanionic antiscalant agent is a polymer, which comprises carboxylate groups and phosphonate and/or sulphonate groups.
9. Composition according to paragraph 1, wherein the polyanionic antiscalant agent is carboxymethyl inulin.
10. Composition according to paragraph 1, wherein the polyanionic antiscalant is a synthetic copolymer, which comprises at least one polymerised monomer, which is selected from a group consisting of acrylic acid, methacrylic acid, unsaturated mono- and dicarboxylic acids, such as maleic acid, fumaric acid, itaconic acid, aconitic acid, mesaconic acid, citraconic acid, crotonic acid, isocrotonic acid, angelic acid and tiglic acid.
11. Composition according to paragraph 1, wherein the polyanionic antiscalant agent is polyaspartic acid, copolymer of polyaspartic acid or salt thereof.
12. Composition according to paragraph 1, wherein the polyanionic antiscalant agent is a copolymer of allyl sulphonate and maleic anhydride.
13. Composition according to paragraph 1, wherein the polyanionic antiscalant agent is polyepoxysuccinic acid or its salt.
14. Composition according to any of paragraphs 9 - 13, wherein the polyanionic antiscalant has an average molecular weight of 1000 - 20 000 g/mol, preferably 1500 - 8000 g/mol, more preferably 2000 - 7000 g/mol.
15. Composition according to any of paragraphs 1 - 14, wherein the composition further comprises at least one additive, which is selected from a group comprising corrosion inhibitors, biocides, surfactants, sequestrants and other different antiscaling agents.

### SHORT DESCRIPTION OF THE FIGURES

- Figure 1: shows a schematic figure of the measurement device employed in Dynamic Tube Blocking Test Method,
- Figure 2: shows typical graph and program steps of dynamic tube blocking procedure with MIC of 1.25 ppm,
- Figure 3: shows the effect of magnesium on CaC₂O₄ scale formation without scale inhibitor,
- Figure 4: shows the effect of chloride on CaC₂O₄ scale formation without scale inhibitor,
- Figure 5a: shows inhibition performance of PESA without magnesium,
- Figure 5b: shows the effect of magnesium on inhibition performance of PESA,
- Figure 6a: shows inhibition performance of SHMP without magnesium,

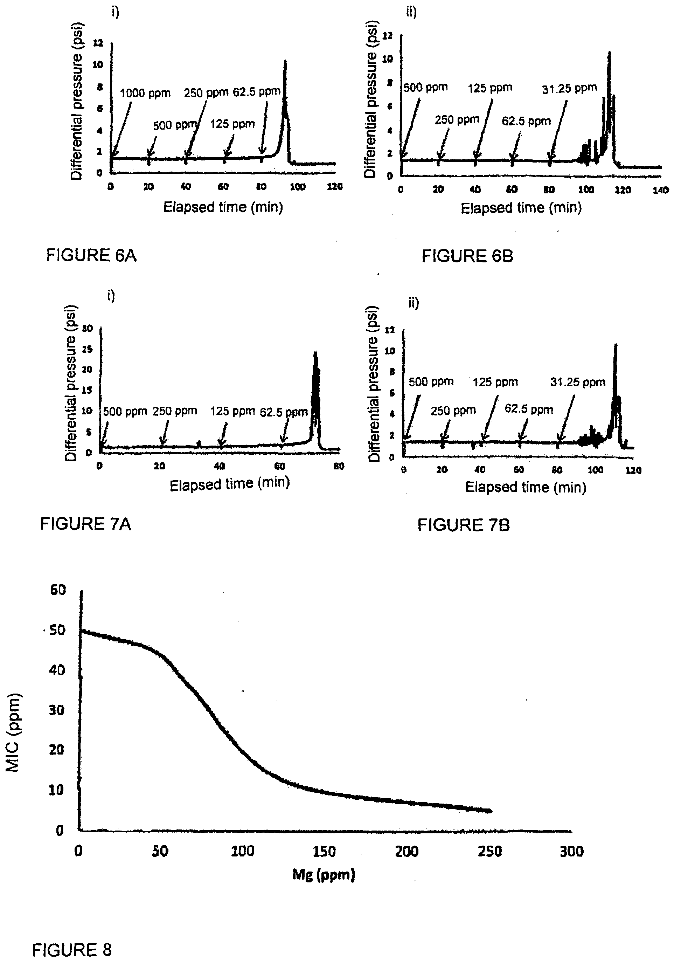

- Figure 6a: shows effect of magnesium on inhibition performance of SHMP,
- Figure 7a: shows inhibition performance of CMI without magnesium,
- Figure 7b: shows effect of magnesium on inhibition performance of CMI,
- Figure 8: shows scale inhibition performance of copolymer of allyl sulphonate and maleic anhydride with various magnesium dosages.

### EXPERIMENTAL

Dynamic tube blocking procedure is used to evaluate the efficiency of antiscalant compositions to inhibit and remove mineral deposit formation. Dynamic tube blocking tests are based on measurement of differential pressure, which increases with scale formation. Differential pressure of the system increases when scale is deposited onto metallic surface of a narrow capillary. Dynamic tube blocking system allows alteration of various parameters; temperature, pressure, flow rate and water chemistry. Dynamic tube blocking procedure is used to determinate Minimum Inhibitor Concentration, MIC, i.e. the antiscalant dosage which prevents further fouling of capillary tube.

The test method used in this application is described below.

### Description of Dynamic Tube Blocking Test Method

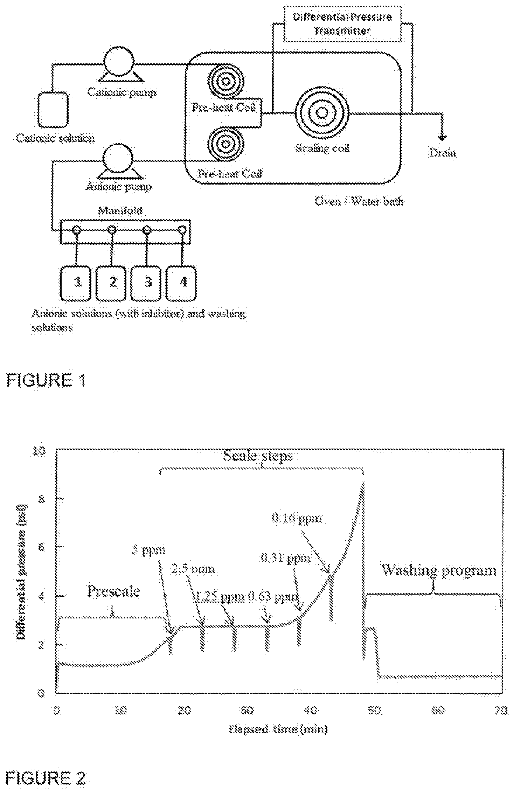

In this application, a commercial dynamic tube blocking apparatus, Process Measurement and Control System dynamic scale loop "PMAC" (PMAC Systems Ltd., Aberdeen, UK) is used for scaling measurements. Figure 1 presents a schematic figure of the measurement device.

Dynamic tube blocking method is based on measurement of differential pressure that is commensurate to the amount of scale deposited onto the surface of a capillary tube. Solutions with precipitating cationic and anionic species are brought to the system separately and they are preheated or cooled in a water bath to a desired temperature in pre-heat coils. The streams are mixed together right before the scaling coil in which precipitation occurs onto the surface of a thin metal pipe and the differential pressure across the scaling coil is measured. Inner diameter of the scaling coil is 0.8 mm and the length of the coil is 1 m. Material of the scaling coil is stainless steel.

The antiscalant composition to be tested is brought to the system with the anionic solution in order to avoid interactions between antiscalant composition and cations before precipitation. The ratio between the first anionic solution and the second anionic solution including antiscalant composition is varied so that antiscalant composition dosage can be altered. Generally the antiscalant composition dosage is decreased stepwise and the Minimum Inhibitor Concentration, MIC, is determined from a sudden increase in differential pressure. Thus MIC is the smallest antiscalant composition dosage that prevents further fouling of the scaling coil.

Additionally, the system includes two washing solutions, which typically are (i) a dilute acid or a chelating agent and (ii) deionized water. Variable parameters in dynamic tube blocking tests are temperature, pressure, flow rate and duration of one scale step, i.e. time with constant inhibitor dosage. Furthermore, water chemistry of cationic and anionic solutions can be altered. Figure 2 presents typical graph and program steps of dynamic tube blocking procedure with MIC of 1.25 ppm.

Measurement may be started with a prescale stage, in which cationic and anionic solutions are mixed without the scale inhibitor in order to obtain a thin layer of scale onto the capillary metal surface. The initial scale layer is deposited onto the coil surface in primary nucleation manner, i.e. nucleation in the absence of formed crystals, whereas secondary nucleation occurs when crystals of material being crystallized are present. Primary nucleation is affected most by the supersaturation of the system, whereas secondary nucleation is affected most by crystalline size. In practical applications scale inhibitors are injected into a system in which precipitate is already present. Therefore the scale inhibition in practical applications corresponds to inhibition of secondary nucleation and/or crystal growth; hence scale inhibition with some precipitate already present simulates better inhibition cases in practical applications. Furthermore, prescale stage enhances the repeatability of the measurements.

Duration of the prescale step can be varied. In the measurement presented in Figure 2, prescale is set to finish after 20 minutes or after differential pressure exceeds delta differential pressure 1 psi. Therefore, prescale step finishes when rapid precipitation begins. In the measurement of Figure 2, prescale step finished after 18 minutes when differential pressure exceeded 2 psi.

After the optional prescale step, injection of the antiscalant composition is started into the system. Antiscalant composition dosage is thereafter decreased step wise and Minimum Inhibitor Concentration, MIC, can be determined from the sudden increase in differential pressure. In the measurement of Figure 2 MIC is approximated to be 1.25 ppm. The duration of scale steps can be also varied depending on the scaling process. In the measurement of Figure 2 scale step duration is 5 minutes. However, if the flow rate is slow scale steps should be long enough in order to have sufficient time for cationic and anionic solutions to react. Scale formation time depends also strongly on the scale being deposited. Therefore a measurement without antiscalant composition should be performed in order to assess the required time of precipitation for uninhibited system.

The washing program starts when the differential pressure exceeds a specified value, for instance 10 psi, or when scale steps are completed. Washing program includes initial acid or chelating agent wash that dissolves formed scale from the capillary. After dissolution, scaling coil is flushed with deionized water.

PMAC system can be used at elevated temperatures and pressures as well as at low temperatures, since the scaling loop can be placed either in an oven or in a thermostated water bath. A Memmert heat chamber (Memmert GmbH + Co. KG, Germany) is used in measurements performed at elevated temperatures and a Julabo F34 water bath (Julabo GmbH, Germany) is used for low temperature measurements. Operating temperature and pressure ranges in PMAC device are ∼4 - 200 °C and 1 - 200 bar, respectively. PMAC device contains three 10 ml titanium high pressure liquid chromatography pumps with pressure sensors. Flow rate of the pumps can be adjusted from 0.1 ml/min to 9.9 ml/min.

### Parameters for Dynamic Tube Blocking Test Method for CaC₂O₄ scaling

Temperature, pH, flow rate and supersaturation of the system are optimised in order to obtain reliable test method setup for comparative scale inhibitor tests.

Temperature: an average temperature of ∼25 °C is chosen for scaling measurements.

pH: solutions pH is adjusted to 8.5 by NaOH in order to keep all oxalate as anionic species rather than oxalic acid.

Test solutions: For measurement with 125 ppm calcium and 250 ppm oxalate, deposition occurs after 15 minutes. Since it is beneficial to be able to perform quick screening measurements, solutions with 125 ppm calcium and 250 ppm oxalate are chosen for measurements. Furthermore, these concentrations are in the range of typical concentrations in the bleaching plants. Scaling solutions contain only CaCl₂×2 H₂O and Na₂C₂O₄ in cationic and anionic solutions, respectively. Solutions are prepared by dissolving reagents to ion exchanged water and by filtering them through 0.2 µm Merck Millipore filter paper.

Table 1 presents optimised ionic concentrations of calcium oxalate scaling system.

**Table 1. Ionic concentrations of CaC₂O₄ scaling solutions.**

| Test solutions | Ions (ppm) | | | |
|---|---|---|---|---|
| | Ca²⁺ | Na⁺ | Cl⁻ | C₂O₄²⁻ |
| Anionic solution | 0 | 261 | 0 | 500 |
| Cationic solution | 250 | 0 | 442 | 0 |
| 50:50 mixture of anionic and cationic solution | 125 | 131 | 221 | 250 |

Washing solutions: Ion exchanged water and ∼5 M HNO₃ solutions are used as washing solutions. HNO₃ is chosen, since it dissolves CaC₂O₄, but is not corrosive towards stainless steel coils.

Flow rate: 8 ml/min flow rate is chosen for measurements. Rapid flow rate increases the amount of solutions moving through the capillary and speeds up the kinetics of crystallization.

Duration of scale step: Scale step time has to be longer than 10 minutes in order to ensure performance of scale inhibitors, since scale formation endured approximately 10 minutes with 8 ml/min total flow rate. The scale step time is chosen to be 20 minutes.

Table 2 summarizes the parameters used in the Examples 1 and 2.

**Table 2. Parameters used in the Examples 1 and 2.**

| Concentration of Scaling solution | 125 ppm Ca²⁺, 250 ppm C₂O₄²⁻ |
|---|---|
| Solution pH | ∼ 8.5 |
| Temperature | 25 °C |
| Pressure | 1 |
| Total flow rate | 8 |
| Duration of scale step | 20 |

### EXAMPLE 1

### Magnesium Reference Sample

Effect of magnesium ions on CaC₂O₄ scale formation without antiscalant agent or antiscalant composition is tested. Magnesium is added to cationic solution in order to prevent interactions between oxalate ions and cations before scaling coil. Magnesium is added as MgCl₂×2 H₂O.

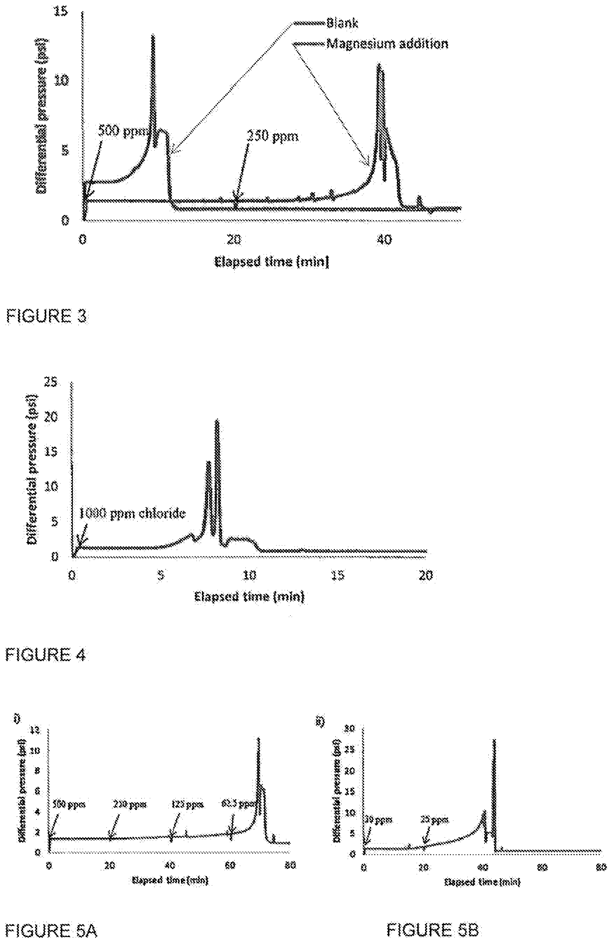

Effect of magnesium on CaC₂O₄ scale formation without scale inhibitor is shown in Figure 3.

### Chloride Reference Sample

Effect of stoichiometric chloride amount on CaC₂O₄ scale formation is tested in order to verify that scale inhibition is due to magnesium ions. Chloride is added as NaCl.

Effect of chloride on CaC₂O₄ scale formation without scale inhibitor is shown in Figure 4. It can be observed that 1000 ppm chloride addition does not prevent CaC₂O₄ scale formation.

### Samples with magnesium and polyanionic antiscalant agents

Effect of magnesium addition with several polyanionic antiscalant agents is tested. Used antiscalant agents are polyepoxysuccinic acid (PESA), hexametaphosphate (SHMP) and carboxymethyl inulin (CMI). Antiscalant agent and magnesium are mixed together and allowed to stand overnight before testing. Magnesium: antiscalant agent ratio is 2:1. Magnesium addition was found to be beneficial for efficiency of all antiscalant agents.

Figure 5a shows inhibition performance of PESA without magnesium and Figure 5b shows effect of magnesium on inhibition performance of PESA.

Figure 6a shows inhibition performance of SHMP without magnesium and Figure 6a shows effect of magnesium on inhibition performance of SHMP.

Figure 7a shows inhibition performance of CMI without magnesium and Figure 7b shows effect of magnesium on inhibition performance of CMI.

Table 3 shows effect of magnesium on minimum inhibition concentration of polyanionic antiscalant agents.

**Table 3. Effect of magnesium on minimum inhibition concentration of polyanionic antiscalant agents.**

| Antiscalant Agent | MIC without Mg (ppm) | MIC with Mg (ppm) |
|---|---|---|
| PESA | 125 - 250 | 40 - 50 |
| SHMP | 125 | ∼60 |
| CMI | 125 | ∼60 |

### EXAMPLE 2

Example 2 is performed in the same manner and using same test parameters as Example 1. The effect of magnesium addition with polyanionic antiscalant agent, which is a copolymer of allyl sulphonate and maleic anhydride is tested. Antiscalant agent and magnesium are mixed together and allowed to stand overnight before testing. Magnesium:antiscalant agent ratio is 2:1. Magnesium addition was found to be beneficial for the efficiency of the antiscalant agent. Scaling solution contained 125 ppm calcium and 250 ppm oxalate.

Figure 8 presents scale inhibition performance of copolymer of allyl sulphonate and maleic anhydride with various magnesium dosages.

### EXAMPLE 3

Oxalate inhibition effect of different antiscalant compositions is tested. The test procedure is as follows:
1. Antiscalant agent is diluted to 1 % concentration, i.e. 10g/L. pH is adjusted to pH 8 by using NaOH or H₂SO₄
2. 50 mL oxalate stock solution is added to a glass jar. Oxalate stock solution is prepared by using Na₂C₂O₄, the concentration of oxalate solution being 4 mmol/L, given as oxalate C₂O₄²⁻.
3. Desired volume of antiscalant agent is added to the glass jar. The constant total volume of antiscalant agent addition is 20 ml. Distilled water is added to obtain the total volume, if necessary. Jar is slightly swivelled to mix the content.
4. 50 mL of calcium stock solution is added to the glass jar. Calcium stock solution is prepared by using CaCl₂, the concentration of calcium solution being 4 mmol/L, given as calcium Ca²⁺.
5. Distilled water is added to obtain the total sample volume 200 mL.
6. pH is measured.
7. The glass jar is placed in the water bath, temperature + 50°C, for three hours.
8. The glass jar is opened and a sample is taken with a syringe from the clear water phase for filtration.
9. The sample is filtrated through 0.2 µm filter (Whatman).
10. pH of the sample is adjusted to pH 2 with 0.2 M HCl.
11. Oxalate amount in the sample is analysed by using ion chromatography. Equipment is Dionex IC, column Ion Pac AS11 (4 × 250 ml), precolumn ION PAC AG11 (4 × 50 ml), eluent KOH, flow rate 1 ml/min.

The amount of oxalate in the liquid sample is proportional to the inhibition activity of the antiscalant composition. If the oxalate ions can be detected from the water phase they have not formed solid complexes with calcium.

In the following experiments the oxalate inhibition value, given in %, is calculated by using the measured oxalate value and theoretical added value, which both values have been corrected mathematically. The measured value is also corrected with a dilution factor. In some instances, the oxalate inhibition value exceeds 100 %. This is due to the used analysis method, which introduces a certain inaccuracy to the individual results. However, the obtained results can be compared with each other and they give a clear and accurate view about the trends within the experimental test series.

### Oxalate inhibition effect for antiscalant composition comprising polyepoxysuccinic acid (PESA) and magnesium

Inhibition effect for antiscalant composition comprising different amounts of polyepoxysuccinic acid, PESA, and magnesium is tested. Following antiscalant compositions are tested:

| | |
|---|---|
| Test 1: | 90 % PESA + 10 % Mg |
| Test 2: | 66 % PESA + 33 % Mg |
| Test 3: | 50 % PESA + 50 % Mg |
| Test 4: | 33 % PESA + 66 % Mg |
| Test 5: | 10 % PESA + 90 % Mg |

The inhibition effect for pure polyepoxysuccinic acid, PESA, alone and for pure magnesium, Mg, alone are tested as reference. The results are shown in Table 4.

From Table 4 it can be seen a dosage of around 200 mg/L of pure PESA (ref.) and above 500 mg/L of pure magnesium (ref.) is required for effectively to keep the oxalate ions in liquid phase. For antiscalant compositions comprising both PESA and magnesium dosage of 50 - 100 mg/L is enough for effectively to keep the oxalate ions in liquid phase. It can be concluded that the oxalate inhibition effect is clearly improved when antiscalant composition is used.

**Table 4. Oxalate inhibition results for antiscalant compositions comprising PESA and magnesium, as well as for PESA and magnesium alone.**

| **Dosage*, mg/L** | **Oxalate Inhibition, %** | | | | | | |
|---|---|---|---|---|---|---|---|
| | PESA (ref.) | Mg (ref.) | Test 1 | Test 2 | Test 3 | Test 4 | Test 5 |
| 0 | 0.0001 | - | - | - | - | - | - |
| 10 | - | - | 43 | - | 23 | 32 | - |
| 20 | - | - | 47 | - | 40 | 41 | - |
| 30 | - | - | 49 | - | 72 | 60 | - |
| 50 | 49 | 16 | 66 | 89 | 100 | 99 | 73 |
| 100 | 60 | 24 | 94 | 101 | 103 | 99 | 97 |
| 200 | 93 | 41 | 102 | 100 | 100 | 100 | 98 |
| 500 | 103 | 89 | 104 | 101 | 101 | 100 | 97 |
| 1000 | 106 | 101 | 104 | 104 | 102 | 101 | 98 |

| | | | | | | | |
|---|---|---|---|---|---|---|---|
| *as active agent | | | | | | | |

Furthermore, an experiment is carried out to clarify if it is necessary to first mix the antiscalant agent and magnesium together, before the addition to the test solution, or if the antiscalant agent and magnesium can be added separately. The results are shown in Table 5.

From Table 5 it can be seen that the mixing of the antiscalant agent and magnesium is to be preferred for effectively to keep the oxalate ions in liquid phase.

**Table 5. Oxalate inhibition results for mixture of PESA and magnesium, and for separate addition of PESA and magnesium.**

| **Dosage*, mg/L** | Oxalate Inhibition, % | |
|---|---|---|
| | 90% PESA + 10% Mg, mixed together before addition | 90% PESA + 10% Mg, separate addition |
| 10 | 43 | 27 |
| 20 | 47 | 43 |
| 50 | 66 | 49 |
| 100 | 94 | 67 |
| 200 | 102 | 92 |
| 500 | 104 | 101 |
| 1000 | 104 | 102 |

| | | |
|---|---|---|
| *as active agent | | |

### Oxalate inhibition effect for antiscalant composition comprising a copolymer of allyl sulphonate and maleic anhydride and magnesium

Inhibition effect for antiscalant composition comprising 90 % of a copolymer of allyl sulphonate and maleic anhydride and 10 % of magnesium is tested. The inhibition effect for pure copolymer of allyl sulphonate and maleic anhydride is tested as reference. The results are shown in Table 6.

From Table 6 it can be seen the antiscalant composition comprising a copolymer of allyl sulphonate and maleic anhydride as well as magnesium is more effective for keeping the oxalate ions in liquid phase, at least when compared to the same copolymer alone.

**Table 6. Oxalate inhibition results for an antiscalant composition comprising a copolymer of allyl sulphonate and maleic anhydride and magnesium.**

| **Dosage*, mg/L** | **Oxalate Inhibition, %** | |
|---|---|---|
| | copolymer (ref.) | 90% copolymer + 10% Mg |
| 0 | 0.0001 | - |
| 20 | - | 30 |
| 50 | 33 | 22 |
| 100 | 18 | 35 |
| 200 | 26 | - |
| 500 | 76 | 101 |
| 1000 | 33 | - |

| | | |
|---|---|---|
| *as active agent | | |

### Oxalate inhibition effect for antiscalant composition comprising polyaspartic acid (PASP) and magnesium

Inhibition effect for antiscalant composition comprising 90 % of polyaspartic acid, PASP, and 10 % of magnesium is tested. The inhibition effect for pure PASP is tested as reference. The results are shown in Table 7.

From Table 7 it can be seen the antiscalant composition comprising polyaspartic acid and magnesium is more effective for keeping the oxalate ions in liquid phase, at least when compared to the same copolymer alone.

**Table 7. Oxalate inhibition results for an antiscalant composition comprising PASP and magnesium.**

| **Dosage*, mg/L** | **Oxalate Inhibition, %** | |
|---|---|---|
| | PASP (ref.) | 90% PASP + 10% Mg |
| 0 | - | - |
| 20 | - | 15 |
| 50 | 19 | 14 |
| 100 | 12 | 16 |
| 200 | 14 | - |
| 500 | 26 | 45 |

| | | |
|---|---|---|
| *as active agent | | |

### Oxalate inhibition effect for antiscalant composition comprising polyepoxysuccinic acid (PESA) and other cations (reference)

Inhibition effect for antiscalant composition comprising 90 % of polyepoxysuccinic acid, PESA, and 10% of different cations are tested. Following antiscalant compositions are tested:
90 % PESA + 10 % iron (Fe)
90 % PESA + 10 % aluminium (Al)
90 % PESA + 10 % magnesium (Mg)

The results are shown in Table 6, from which it can be seen the antiscalant composition comprising polyepoxysuccinic acids and magnesium is more effective for keeping the oxalate ions in liquid phase than compositions comprising same amount of polyepoxysuccinic acid and iron or aluminium.

**Table 8. Oxalate inhibition results for antiscalant compositions comprising PESA and different cations.**

| **Dosage*, mg/L** | **Oxalate Inhibition, %** | | |
|---|---|---|---|
| | PESA + Fe (ref.) | PESA + Al (ref.) | PESA + Mg |
| 20 | 40 | 24 | 47 |
| 50 | 33 | 28 | 66 |

| | | | |
|---|---|---|---|
| as active agent | | | |

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. Use of liquid antiscalant composition comprising a polyanionic antiscalant agent having a plurality of anionic groups, which antiscalant agent is selected from the group consisting of polyphosphates, polymers comprising at least one carboxylic group and any of their mixtures, wherein the antiscalant composition further comprises magnesium ions, for inhibiting and/or reducing formation of calcium oxalate scale in pulp and paper making processes

2. Use according to claim 1, **characterised in that** the antiscalant composition is used at bleaching stage of pulping, preferably in ECF or TCF bleaching process.

3. Use according to claim 1 or 2, **characterised in that** the antiscalant composition is used in amount of 1 - 1000 ppm, preferably 5 - 500 ppm, more preferably 5 - 100 ppm, still more preferably 7.5 - 80 ppm.

4. Use according to any of claims 1 - 3, **characterised in that** the antiscalant composition is added to an aqueous flow having pH in the range of 3 - 8, preferably 4 - 7.5, more preferably 4.5 - 7.5.

5. Use according to claim 1, **characterised in that** the mass ratio of magnesium ions to polyanionic antiscalant agent is 0.1 - 10, preferably 0.2 - 5, more preferably 0.5 - 3, even more preferably 0.8 - 2.5.

6. Use according to claim 1, **characterised in that** the composition comprises an excess of magnesium ions compared to number of anionic groups in the polyanionic antiscalant.

7. Use according to claim 1, **characterised in that** the polyanionic antiscalant agent is sodium hexametaphosphate.

8. Use according to claim 1, **characterised in that** the polyanionic antiscalant agent is a polymer, which comprises carboxylate groups and phosphonate and/or sulphonate groups.

9. Use according to claim 1, **characterised in that** the polyanionic antiscalant agent is carboxymethyl inulin.

10. Use according to claim 1, **characterised in that** the polyanionic antiscalant is a synthetic copolymer, which comprises at least one polymerised monomer, which is selected from a group consisting of acrylic acid, methacrylic acid, unsaturated mono- and dicarboxylic acids, such as maleic acid, fumaric acid, itaconic acid, aconitic acid, mesaconic acid, citraconic acid, crotonic acid, isocrotonic acid, angelic acid and tiglic acid.

11. Use according to claim 1, **characterised in that** the polyanionic antiscalant agent is polyaspartic acid, copolymer of polyaspartic acid or salt thereof.

12. Use according to claim 1, **characterised in that** the polyanionic antiscalant agent is a copolymer of allyl sulphonate and maleic anhydride.

13. Use according to claim 1, **characterised in that** the polyanionic antiscalant agent is polyepoxysuccinic acid or its salt.

14. Use according to any of claims 9 - 13, **characterised in that** the polyanionic antiscalant has an average molecular weight of 1000 - 20 000 g/mol, preferably 1500 - 8000 g/mol, more preferably 2000 - 7000 g/mol.

15. Use according to any of claims 1 - 14, **characterised in that** the composition further comprises at least one additive, which is selected from a group comprising corrosion inhibitors, biocides, surfactants, sequestrants and other different antiscaling agents.

## Patentansprüche

1. Verwendung einer flüssigen Antiscalantzusammensetzung, die ein polyanionisches Antiscalantmittel mit einer Vielzahl an anionischen Gruppen umfasst, deren Antiscalantmittel ausgewählt ist aus der Gruppe, bestehend aus Polyphosphaten, Polymeren, die wenigstens eine Carboxylgruppe umfassen, und beliebigen ihrer Mischungen, wobei die Antiscalantzusammensetzung weiterhin Magnesiumionen umfasst, zum Inhibieren und/oder Reduzieren der Bildung von Calciumoxalatablagerungen in Pulpe- und Papierherstellungsverfahren.

2. Verwendung gemäß Anspruch 1, **dadurch gekennzeichnet, dass** die Antiscalantzusammensetzung bei einer Bleichstufe der Pulpeherstellung, vorzugsweise beim ECF- oder TCF-Bleichverfahren, verwendet wird.

3. Verwendung gemäß Anspruch 1 oder 2, **dadurch gekennzeichnet, dass** die Antiscalantzusammensetzung in einer Menge von 1-1000 ppm, vorzugsweise 5-500 ppm, bevorzugter 5-100 ppm, noch bevorzugter 7,5-80 ppm, verwendet wird.

4. Verwendung gemäß einem der Ansprüche 1-3, **dadurch gekennzeichnet, dass** die Antiscalantzusammensetzung einem wässrigen Strom mit einem pH im Bereich von 3-8, vorzugsweise 4-7,5, bevorzugter 4,5-7,5, zugefügt wird.

5. Verwendung gemäß Anspruch 1, **dadurch gekennzeichnet, dass** das Massenverhältnis von Magnesiumionen zu polyanionischem Antiscalantmittel 0,1-10, vorzugsweise 0,2-5, bevorzugter 0,5-3, noch bevorzugter 0,8-2,5, beträgt.

6. Verwendung gemäß Anspruch 1, **dadurch gekennzeichnet, dass** die Zusammensetzung einen Überschuss an Magnesiumionen im Vergleich zu der Anzahl an anionischen Gruppen in dem polyanionischen Antiscalant umfasst.

7. Verwendung gemäß Anspruch 1, **dadurch gekennzeichnet, dass** das polyanionische Antiscalantmittel Natriumhexametaphosphat ist.

8. Verwendung gemäß Anspruch 1, **dadurch gekennzeichnet, dass** das polyanionische Antiscalantmittel ein Polymer, welches Carboxylatgruppen und Phosphonat- und/oder Sulfonatgruppen umfasst, ist.

9. Verwendung gemäß Anspruch 1, **dadurch gekennzeichnet, dass** das polyanionische Antiscalantmittel Carboxymethylinulin ist.

10. Verwendung gemäß Anspruch 1, **dadurch gekennzeichnet, dass** das polyanionische Antiscalant ein synthetisches Copolymer, das wenigstens ein polymerisiertes Monomer, welches ausgewählt ist aus einer Gruppe, bestehend aus Acrylsäure, Methacrylsäure, ungesättigten Mono- und Dicarbonsäuren, wie Maleinsäure, Fumarsäure, Itaconsäure, Aconitsäure, Mesaconsäure, Citraconsäure, Crotonsäure, Isocrotonsäure, Angelicasäure und Tiglinsäure, umfasst, ist.

11. Verwendung gemäß Anspruch 1, **dadurch gekennzeichnet, dass** das polyanionische Antiscalantmittel Polyasparaginsäure, ein Copolymer von Polyasparaginsäure oder ein Salz davon ist.

12. Verwendung gemäß Anspruch 1, **dadurch gekennzeichnet, dass** das polyanionische Antiscalantmittel ein Copolymer von Allylsulfonat und Maleinsäureanhydrid ist.

13. Verwendung gemäß Anspruch 1, **dadurch gekennzeichnet, dass** das polyanionische Antiscalantmittel Polyepoxybernsteinsäure oder ihr Salz ist.

14. Verwendung gemäß einem der Ansprüche 9-13, **dadurch gekennzeichnet, dass** das polyanionische Antiscalant ein durchschnittliches Molekulargewicht von 1000-20000 g/mol, vorzugsweise 1500-8000 g/mol, bevorzugter 2000-7000 g/mol, besitzt.

15. Verwendung gemäß einem der Ansprüche 1-14, **dadurch gekennzeichnet, dass** die Zusammensetzung weiterhin wenigstens ein Additiv, welches ausgewählt ist aus einer Gruppe, umfassend Korrosionsinhibitoren, Biozide, Tenside, Sequestriermittel und andere unterschiedliche Antiscalantmittel, umfasst.

## Revendications

1. Utilisation d'une composition antitartre liquide comprenant un agent antitartre polyanionique ayant une pluralité de groupes anioniques, lequel agent antitartre est choisi dans le groupe consistant en les polyphosphates, les polymères comprenant au moins un groupe carboxylique et l'un quelconque de leurs mélanges, dans laquelle la composition antitartre comprend en outre des ions magnésium, en vue d'inhiber et/ou de réduire la formation de tartre d'oxalate de calcium dans des procédés de fabrication de pâte et de papier.

2. Utilisation selon la revendication 1, **caractérisée en ce que** la composition antitartre est utilisée à un stade de blanchiment de la réduction du bois en pâte, de préférence dans un procédé de blanchiment ECF ou TCF.

3. Utilisation selon la revendication 1 ou 2, **caractérisée en ce que** la composition antitartre est utilisée dans une quantité de 1 à 1 000 ppm, de préférence 5 à 500 ppm, de manière davantage préférée 5 à 100 ppm, de manière encore davantage préférée 7,5 à 80 ppm.

4. Utilisation selon l'une quelconque des revendications 1 à 3, **caractérisée en ce que** la composition antitartre est ajoutée à un flux aqueux ayant un pH dans la plage de 3 à 8, de préférence 4 à 7,5, de manière davantage préférée 4,5 à 7,5.

5. Utilisation selon la revendication 1, **caractérisée en ce que** le rapport en masse d'ions magnésium sur agent antitartre polyanionique est de 0,1 à 10, de préférence 0,2 à 5, de manière davantage préférée 0,5 à 3, de manière encore davantage préférée de 0,8 à 2,5.

6. Utilisation selon la revendication 1, **caractérisée en ce que** la composition comprend un excès d'ions magnésium en comparaison à un nombre de groupes anioniques dans l'antitartre polyanionique.

7. Utilisation selon la revendication 1, **caractérisée en ce que** l'agent antitartre polyanionique est l'hexamétaphosphate de sodium.

8. Utilisation selon la revendication 1, **caractérisée en ce que** l'agent antitartre polyanionique est un polymère, qui comprend des groupes carboxylate et des groupes phosphonate et/ou sulfonate.

9. Utilisation selon la revendication 1, **caractérisée en ce que** l'agent antitartre polyanionique est de la carboxyméthyl inuline.

10. Utilisation selon la revendication 1, **caractérisée en ce que** l'antitartre polyanionique est un copolymère synthétique, qui comprend au moins un monomère polymérisé, qui est choisi dans un groupe consistant en l'acide acrylique, l'acide méthacrylique, les acides mono- et di-carboxyliques insaturés, tels que l'acide maléique, l'acide fumarique, l'acide itaconique, l'acide aconitique, l'acide mésaconique, l'acide citraconique, l'acide crotonique, l'acide isocrotonique, l'acide angélique, et l'acide tiglique.

11. Utilisation selon la revendication 1, **caractérisée en ce que** l'agent antitartre polyanionique est le poly(acide aspartique), un copolymère de poly(acide aspartique) ou l'un de ses sels.

12. Utilisation selon la revendication 1, **caractérisée en ce que** l'agent antitartre polyanionique est un copolymère de sulfonate d'allyle et d'anhydride maléique.

13. Utilisation selon la revendication 1, **caractérisée en ce que** l'agent antitartre polyanionique est du poly(acide époxysuccinique) ou son sel.

14. Utilisation selon l'une quelconque des revendications 9 à 13, **caractérisée en ce que** l'antitartre polyanionique a une masse moléculaire moyenne de 1 000 à 20 000 g/mole, de préférence de 1 500 à 8 000 g/mole, de manière davantage préférée 2 000 à 7 000 g/mole.

15. Utilisation selon l'une quelconque des revendications 1 à 14, **caractérisée en ce que** la composition comprend en outre au moins un additif, qui est choisi dans un groupe comprenant des inhibiteurs de corrosion, des biocides, des tensioactifs, des séquestrants et d'autres agents antitartres différents.
